# EUROPÄISCHE PATENTANMELDUNG

(11) **EP 1 184 251 A1**
(43) Veröffentlichungstag der Anmeldung: **06.03.2002**
(21) Anmeldenummer: 01810656.7
(22) Anmeldetag: 05.07.2001
(51) Int. Cl.: B61G 11/18, F16F 9/32

(54) **Federnde Stoss- und/oder Zugeinrichtung für Schienenfahrzeuge**

(30) Priorität: 01.09.2000 CH 17082000
(71) Anmelder: Schwab Verkehrstechnik AG, 8207 Schaffhausen (CH)
(72) Erfinder: Ziegler, Otto, 8240 Thayngen (CH)
(74) Vertreter: Rottmann, Maximilian R.

(57) **Zusammenfassung**

Bei einer federnden Stoss- und/oder Zugeinrichtung für Schienenfahrzeuge, die mit einer gashydraulischen Dämpfungseinrichtung versehen ist, wird eine Druckanzeige (15) zum Überwachen des in der Dämpfungseinrichtung vorherrschenden statischen Überdrucks vorgeschlagen. Die Druckanzeige (15) umfasst ein mittels einer Feder (20) vorgespanntes Anzeigeelement (16), welches mit einem unter Überdruck stehenden Innenraum (8) der gashydraulischen Dämpfungseinrichtung in Verbindung steht. Das Anzeigeelement (16) ist vom unter Überdruck stehenden Gas entgegen der Federkraft (20) soweit verschiebbar, dass dessen Position manuell und/oder visuell überprüfbar ist. Durch diese Druckanzeige (15) kann erstmals auf einfache Weise der Zustand einer federnden Stoss- und/oder Zugeinrichtung im Hinblick auf deren sichere und zuverlässige Funktionsfähigkeit überprüft werden, ohne dass die Druckanzeige (15) von den dynamischen Druckveränderungen im Innenraum (8) der gashydraulischen Dämpfungseinrichtung beeinflusst wird.

## Beschreibung

Die Erfindung betrifft eine federnde Stoss- und/oder Zugeinrichtung für Schienenfahrzeuge gemäss dem Oberbegriff des Anspruchs 1.

Federnde Stoss- und/oder Zugeinrichtungen für Schienenfahrzeuge sind in verschiedensten Ausführungen wie beispielsweise in Form von Puffern oder von Kupplungen mit Feder- bzw. Dämpfungseinrichtungen bekannt. Währenddem ein Puffer nur Stosskräfte aufnehmen muss, müssen die genannten Kupplungen, mittels welchen Schienenfahrzeuge federnd miteinander verbunden werden, sowohl Zug- wie auch Stosskräfte aufnehmen können.

Um den steigenden Anforderungen an das Dämpfungsverhalten der Stoss- und/oder Zugeinrichtungen gerecht zu werden, kommen vermehrt gas-hydraulische Dämpfungseinrichtungen zum Einsatz. Dabei findet anstelle eines herkömmlichen mechanischen Federpakets eine Gaspatrone bzw. eine gas-hydraulische Dämpfungseinrichtung Verwendung, welche den Stössel mittels eines unter Überdruck stehenden Gases vorspannen. Das Dämpfungsverhalten der Stoss- und/oder Zugeinrichtung hängt insbesondere auch vom statischen Überdruck in der Dämpfungseinrichtung ab; nimmt dieser ab und unterschreitet einen bestimmten Wert, so ist eine sichere und korrekte Wirkungsweise der Zug- und/oder Stosseinrichtung nicht mehr gewährleistet. Allerdings sind für einen Druckverlust neben der zeitlichen Einsatzdauer und dem Alter der Dämpfungseinrichtung noch eine Vielzahl von weiteren, nicht näher bestimmbaren Parametern verantwortlich. Ohne grösseren Aufwand ist es daher sehr schwierig zu erkennen, ob der statische Überdruck der Dämpfungseinrichtung noch innerhalb einer bestimmten Grenze liegt und ob somit eine zuverlässige Wirkungsweise der Zug- und/oder Stosseinrichtung noch gewährleistet ist.

Es ist daher die Aufgabe der Erfindung, eine gemäss dem Oberbegriff des Anspruchs 1 ausgebildete Zug- und/oder Stosseinrichtung derart auszugestalten, dass der statische Überdruck in der Dämpfungseinrichtung schnell und einfach überprüfbar ist.

Diese Aufgabe wird durch die im Kennzeichen des Anspruchs 1 angeführten Merkmale gelöst.

Bevorzugte Ausführungsformen der Erfindung sind in den abhängigen Ansprüchen 2 bis 8 umschrieben.

Bei einem bevorzugten Ausführungsbeispiel wird vorgeschlagen, das Anzeigeelement in einer Bohrung aufzunehmen und ein Halsteil vorzusehen, welches bei Überschreiten eines vorgegebenen Minimaldrucks aus der Bohrung hervorsteht. Die Funktionsfähigkeit der Druckanzeige ist dabei einfach überprüfbar, indem das Anzeigeelement am Halsteil manuell nach innen gedrückt wird. Sofern der Überdruck in der Dämpfungseinrichtung noch oberhalb eines vorbestimmten Minimalwertes liegt, wird das Anzeigeelement nach dem Loslassen des Halsteils sofort wieder nach aussen verschoben.

Ein Ausführungsbeispiel der Erfindung wird nachfolgend anhand von Zeichnungen näher erläutert. In diesen Zeichnungen zeigt:
Fig. 1 einen Längsschnitt durch einen Puffer im Ruhezustand, und
Fig. 2 einen vergrösserten Ausschnitt aus der Fig. 1.

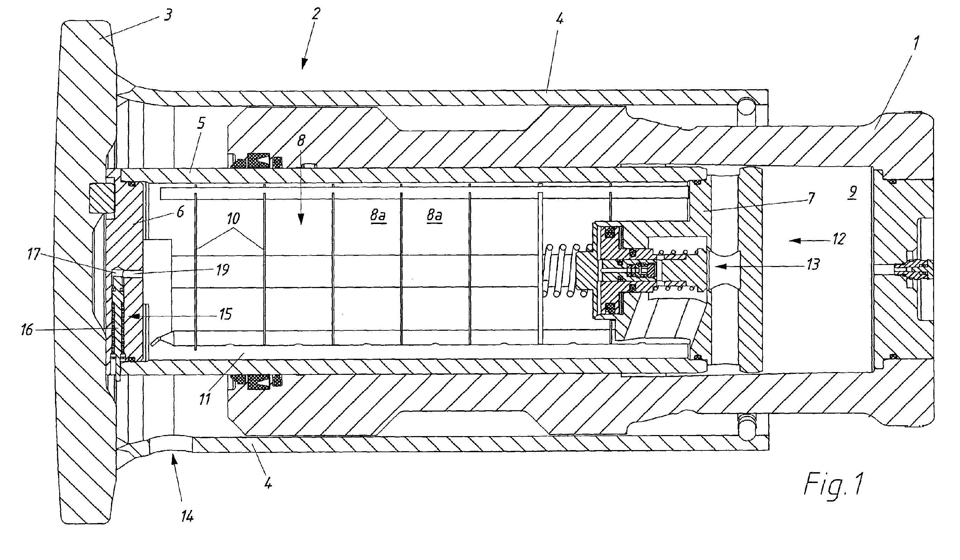

Fig. 1 zeigt als Ausführungsbeispiel einer federnden Zug- und/oder Stosseinrichtung einen Puffer im ausgefederten Ruhezustand. Der Puffer weist eine am Schienenfahrzeug (nicht dargestellt) zu befestigende Pufferhülse 1 sowie einen Pufferstössel 2 auf. Der Pufferstössel 2 ist auf der Vorderseite mit einem Pufferteller 3 versehen, der mit einem äusseren Stösselrohr 4 und einem inneren Plungerrohr 5 in Wirkverbindung steht. Das beidseitig von je einem Flansch 6, 7 verschlossene Plungerrohr 5 bildet in seinem Innenraum einen Gasraum 8 zur Aufnahme eines unter einem statischen Überdruck von ca. 10-20 bar stehenden Gases sowie einer Teilmenge des Hydraulikmediums. Der Gasraum 8 ist durch Trennbleche 10 in eine Vielzahl von Teilräume 8a unterteilt. Zwischen dem fahrzeugseitigen Ventilflansch 7 und dem fahrzeugseitigen Ende der Pufferhülse 1 wird im Innenraum der Pufferhülse 1 ein Ölraum 9 gebildet.

Der fahrzeugseitige Ventilflansch 7 bildet zusammen mit einer darin aufgenommenen Ventilanordnung 13 eine hydraulische Regeleinrichtung 12, welche den Durchfluss des Hydraulikmediums zwischen den zwei Räumen 8, 9 in Abhängigkeit der auf den Pufferteller 3 einwirkenden Kräfte regelt. Um den statischen Überdruck im Gasraum 8 überwachen zu können, ist eine Druckanzeige 15 vorgesehen, die im vorderen Ventilflansch 6 des Plungerrohrs 5 aufgenommen ist. Diese Druckanzeige 15 besteht aus einem Anzeigeelement 16 das in einer Bohrung 17 aufgenommen ist. Vom Ende der Bohrung 17 führt ein Kanal 19 in den Innenraum 8 des Plungerrohrs 5. Über diesen Kanal 19 wird die Stirnseite des Anzeigeelements 16 mit dem im Gasraum 8 vorherrschenden Druck beaufschlagt. Im Bereich der Druckanzeige 15 ist das Stösselrohr 4 mit einer Öffnung 14 versehen, über welche die Druckanzeige 15 sichtbar bzw. ertastbar ist.

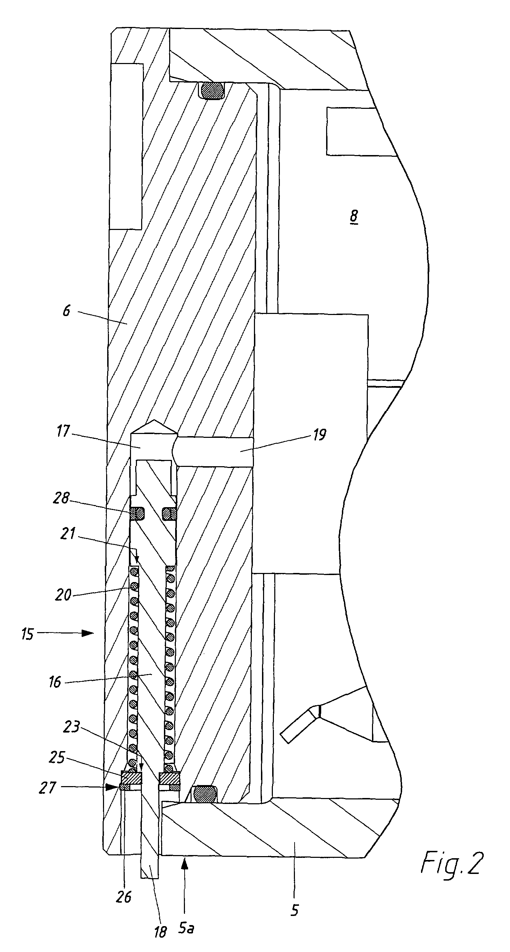

Figur 2 zeigt das Anzeigeelement 16 in vergrösserter Darstellung. Das Anzeigeelement 16 weist ein Halsteil 18 auf, das über die Oberfläche 5a des Plungerrohrs 5 vorsteht. Zum Vorspannen des Anzeigeelements 16 ist eine Feder 20 vorgesehen, welche das Anzeigeelement 16 nach innen drückt. Die Feder 20 ist zwischen einem inneren Absatz 22 des Anzeigeelements 16 sowie einem Führungsring 25 eingespannt. Der Führungsring 25 ist mittels eines in einer Nut 27 aufgenommenen Sprengrings 26 gesichert. Der Führungsring 25 positioniert zudem das Halsteil 18 in radialer Richtung. Ein äusserer Absatz 23 des Anzeigeelements 16 bildet den Übergang zum Halsteil 18 . Dieser Absatz 23 bildet zusammen mit dem Führungsring 25 einen Anschlag, der die Bewegung des Anzeigeelements 16 nach aussen begrenzt. Dies ist insofern wichtig, da beim Einschieben des Pufferstössels der Druck im Gasraum 8 auf ca. 100 bis 200 bar ansteigen kann.

Mit dem Führungsring 25, dem Absatz 23 und zweckmässiger Auslegung der Feder 20 wird sichergestellt, dass das Anzeigeelement 16 bei ausreichendem Gasdruck immer in der gleichen Position verharrt und die Dichtung 28 nur statisch belastet und sie somit vor vorzeitigem Verschleiss geschützt ist.

Es versteht sich, dass die einzelnen Elemente der Druckanzeige 15, namentlich die Vorspannkraft der Feder 20, die mit dem Gasdruck beaufschlagte vordere Stirnfläche des Anzeigeelements 16 sowie die Reibung des vorgesehenen O-Rings 28 auf den statischen Überdruck im Ruhezustand des Puffers abgestimmt sind, um so eine sichere und einwandfreie Funktion der Druckanzeige 15 sicherzustellen.

Das Anzeigeelement 16 ist so ausgelegt und dimensioniert, dass das Halsteil 18 aus der Bohrung 17 hervorsteht und sich über die Aussenseite 5a des Plungerrohrs 5 erhebt, solange ein vorgegebener Minimaldruck, der für eine einwandfreie Funktionsweise des Puffers notwendig ist, nicht unterschritten wird. Sobald der vorgegebene minimale Gasdruck jedoch unterschritten wird, drückt die Feder 20 das Anzeigeelement 16 soweit nach innen, dass dessen Halsteil 18 nicht mehr aus der Bohrung 17 hervorsteht und sich nicht mehr über die Aussenseite 5a des Plungerrohrs 5 erhebt. Die korrekte Funktionsweise des Anzeigeelements 15 kann jederzeit überprüft werden, indem das Halsteil 18 manuell nach innen gedrückt wird. Sofern der statische Gasdruck noch oberhalb des festgesetzten Grenzwertes ist, wird das Anzeigeelement 16 vom Gasdruck wieder soweit nach aussen gedrückt, dass das Halsteil 18 die Aussenseite 5a des Plungerrohrs 5 wieder überragt.

Die gezeigte Druckanzeige 15 stellt ein einfaches, günstiges und wartungsfreies Hilfsmittel zur Überwachung des in der gashydraulischen Dämpfungseinrichtung vorherrschenden statischen Überdrucks dar. Die Position des Anzeigeelements 16 kann dabei sowohl visuell wie auch manuell überprüft werden. Zudem kann die Druckanzeige 15 auf Ihre Funktionsfähigkeit hin überprüft werden, indem das Anzeigeelement 16 am Halsteil 18 manuell nach innen gedrückt wird. Sofern der statische Überdruck in der gashydraulischen Dämpfungseinrichtung einen vorbestimmten Minimalwert nicht unterschritten hat, wird das Anzeigeelement 16 sofort nach dem Loslassen des Haslteils 18 wieder soweit nach aussen gedrückt, dass sich das Halsteil 18 über die Aussenseite 5a des Plungerrohrs 5 erhebt.

Mit der erfindungsgemässen Druckanzeige 15 kann auf einfache Weise der Zustand einer federnden Stoss- und/oder Zugeinrichtung im Hinblick auf deren sichere und zuverlässige Funktionsfähigkeit überprüft werden. Durch den vorgesehenen Anschlag 23, 25 wird zudem verhindert, dass dass die Druckanzeige 15 von den dynamischen Druckveränderungen im Innenraum 8 der gashydraulischen Dämpfungseinrichtung beeinflusst wird.

Es versteht sich, dass das vorgängig gezeigte Ausführungsbeispiel nicht als abschliessend zu betrachten ist, sondern dass im Rahmen des in den Patentansprüchen definierten Schutzumfangs durchaus abweichende Ausführungsformen möglich sind . So könnte die Druckanzeige beispielsweise auch auf der Seite des Ölraums 9 angeordnet werden.

## Patentansprüche

1. Federnde Stoss- und/oder Zugeinrichtung für Schienenfahrzeuge, mit einer fahrzeugseitig fixierten Hülse (1) und einem relativ dazu verschiebbaren, mittels einer gashydraulischen Dämpfungseinrichtung (12) abgestützten Stössel (2), **dadurch gekennzeichnet, dass** eine Druckanzeige (15) zum Überwachen des im Innern der gashydraulischen Dämpfungseinrichtung (12) vorherrschenden statischen Überdrucks vorgesehen ist.

2. Federnde Stoss- und/oder Zugeinrichtung nach Anspruch 1, **dadurch gekennzeichnet, dass** die Druckanzeige (15) ein mittels einer Feder (20) vorgespanntes Anzeigeelement (16) umfasst, welches mit einem unter Überdruck stehenden Innenraum (8) der gashydraulischen Dämpfungseinrichtung (12) in Verbindung steht und vom unter Überdruck stehenden Gas und/oder Öl entgegen der Federkraft soweit verschiebbar ist, dass dessen Position manuell und/oder visuell überprüfbar ist.

3. Federnde Stoss- und/oder Zugeinrichtung nach Anspruch 2, **dadurch gekennzeichnet, dass** das Anzeigeelement (16) in einer Bohrung (17) aufgenommen ist und mit einem Halsteil (18) versehen ist, welcher bei Überschreiten eines vorgegebenen statischen Minimaldrucks aus der Bohrung (17) hervorsteht.

4. Federnde Stoss- und/oder Zugeinrichtung nach Anspruch 2 oder 3, **dadurch gekennzeichnet, dass** ein Anschlag (23, 25) zur Begrenzung der entgegen der Federkraft gerichteten Bewegung des Anzeigeelements (16) vorgesehen ist.

5. Federnde Stoss- und/oder Zugeinrichtung nach Anspruch 4, **dadurch gekennzeichnet, dass** die Funktionsfähigkeit der Druckanzeige (15) überprüfbar ist, indem das Anzeigeelement (16) am Halsteil (18) manuell verschiebbar ist.

6. Federnde Stoss- und/oder Zugeinrichtung nach einem der Ansprüche 3 bis 5, **dadurch gekennzeichnet, dass** das Anzeigeelement (16) einen ersten Absatz (21) aufweist und die Bohrung (17) mit einer Nut (27) zur Aufnahme eines Sprengrings (26) versehen ist, und dass zwischen dem in die Nut (27) eingesetzten Sprengring (26) und dem ersten Absatz (21) die das Anzeigeelement (16) belastende Feder (20) eingespannt ist

7. Federnde Stoss- und/oder Zugeinrichtung nach einem der Ansprüche 4 bis 6, **dadurch gekennzeichnet, dass** dass die Vorspannung der Feder (20) derart ausgelegt ist, dass sich das Anzeigeelement (16) bei ausreichendem statischem Gasdruck am Anschlag anlegt.

8. Federnde Stoss- und/oder Zugeinrichtung nach Anspruch 7, **dadurch gekennzeichnet, dass** auf der Innenseite des Sprengrings (26) ein Führungsring (25) angeordnet ist und das Anzeigeelement (16) einen zweiten Absatz (23) aufweist, welcher zusammen mit dem Führungsring (25) den Anschlag zur Begrenzung der nach aussen gerichteten Bewegung des Anzeigeelements bildet.

9. Federnde Stoss- und/oder Zugeinrichtung nach einem der Ansprüche 2 bis 8, **dadurch gekennzeichnet, dass** der Stössel (2) ein äusseres Stösselrohr (4) und ein hohlzylindrisch ausgebildetes inneres Plungerrohr (5) aufweist, das in seinem Innenraum einen Gasraum (8) zur Aufnahme eines unter Überdruck stehenden Gases bildet, wobei das Plungerrohr (5) endseitig von einem Flansch (6) verschlossen ist, und wobei die Druckanzeige (15) in diesem Flansch (6) aufgenommen ist und das Stösselrohr (4) im Bereich der Druckanzeige (15) mit einer Öffnung (14) versehen ist.
